# EUROPÄISCHE PATENTSCHRIFT

(11) **EP 2 943 395 B1**
(45) Veröffentlichungstag und Bekanntmachung des Hinweises auf die Patenterteilung: **21.02.2018**
(21) Anmeldenummer: 13796029.0
(22) Anmeldetag: 21.11.2013
(51) Int. Cl.: B62L 3/02, B60T 8/17

(54) **HYDRAULIKMODUL FÜR EIN ANTIBLOCKIERSYSTEM FÜR EIN ZWEIRAD**
HYDRAULIC MODULE FOR AN ANTI-LOCK BRAKE SYSTEM FOR A TWO-WHEELER
MODULE HYDRAULIQUE POUR UN SYSTÈME ANTIBLOCAGE POUR UN DEUX-ROUES

(30) Priorität: 14.01.2013 DE 102013200419
(43) Veröffentlichungstag der Anmeldung: 18.11.2015
(73) Patentinhaber: Robert Bosch GmbH, 70442 Stuttgart (DE)
(72) Erfinder: WEH, Andreas, 87477 Sulzberg (DE); HURST, Matthias, 87509 Immenstadt (DE)
(86) Internationale Anmeldenummer: PCT/EP2013/074338
(87) Internationale Veröffentlichungsnummer: WO 2014/108234

(56) Entgegenhaltungen:
- EP-A1- 1 531 104
- EP-A1- 2 311 697
- EP-A2- 2 238 958
- WO-A1-92/07750
- WO-A1-2009/051008
- WO-A1-2010/023985
- DE-A1- 19 508 915
- DE-A1-102010 001 542
- DE-C- 483 487
- US-A- 4 090 739

## Beschreibung

### Gebiet der Erfindung

Die Erfindung betrifft ein Hydraulikmodul für ein Antiblockiersystem für ein Zweirad sowie ein Zweirad mit einem derartigen Hydraulikmodul.

### Hintergrund der Erfindung

Ein Fahrrad-Antiblockiersystem kann die Sicherheit des Fahrers und der anderen Verkehrsteilnehmer erhöhen. Beispielsweise sind Fahrrad-Antiblockiersysteme bekannt, die die Bremskraft mechanisch über Seilzüge steuern.

Der wachsende Markt von elektrisch angetriebenen Fahrädern (sogenannten E-Bikes) und die damit verbundene stetige Verfügbarkeit an elektrischer Energie am Fahrrad bietet neue Möglichkeiten für den aktiven Fahrradfahrerschutz. Die elektrische Motorunterstützung des Fahrradfahrers erhöht außerdem prinzipiell die durchschnittliche Geschwindigkeit und ermöglicht zudem auch weniger routinierteren Fahrradfahrern, höher gelegene Ziele zu erreichen.

Im Motorradbereich sind Antiblockiersysteme bekannt, die analog Kfz-Antiblockiersystemen mit einem Rückförderprinzip arbeiten. Dabei wird die Bremsflüssigkeit aus der Bremse mittels einer Pumpe und einem Motor zurück in Richtung Bremshebel befördert.

Die gattungsgemäße WO 2010/023985 zeigt ein Antiblockiersystem für ein Zweirad. Die DE 483 487, EP 2 238 958 A2 und WO92/07750 zeigen Vorrichtungen, um Gegenstände an einem Zweirad anzubringen.

### Zusammenfassung der Erfindung

Es ist Aufgabe der Erfindung, ein einfach zu installierendes und kostengünstiges Antiblockiersystem für ein Zweirad bereitzustellen.

Diese Aufgabe wird durch den Gegenstand der unabhängigen Ansprüche gelöst. Weitere Ausführungsformen der Erfindung ergeben sich aus den abhängigen Ansprüchen und aus der folgenden Beschreibung.

Ein Aspekt der Erfindung betrifft ein Hydraulikmodul bzw. Antiblockiersystem-Regelmodul für ein hydraulisches Antiblockiersystem für ein Zweirad, beispielsweise für ein E-Bike oder ein Moped.

Gemäß einer Ausführungsform der Erfindung umfasst das Hydraulikmodul einen ersten hydraulischen Anschluss zum Verbinden des Hydraulikmoduls mit einer hydraulischen Leitung zu einer Bremsbetätigungsvorrichtung; einen zweiten hydraulischen Anschluss zum Verbinden des Hydraulikmoduls mit einer hydraulischen Leitung zu einer Radbremse; ein Einlassventil zum Verbinden und Trennen des ersten hydraulischen Anschlusses von dem zweiten hydraulischen Anschluss; und ein Auslassventil zum Verbinden und Trennen eines Druckspeichers mit dem zweiten hydraulischen Anschluss. Weiter umfasst das Hydraulikmodul ein Gehäuse, in dem das Einlassventil und das Auslassventil aufgenommen sind und das den ersten hydraulischen Anschluss und den zweiten hydraulischen Anschluss bereitstellt.

Das Hydraulikmodul umfasst viele oder alle hydraulischen Komponenten des Antiblockiersystems, die in einem eigenen Gehäuse bereitgestellt werden und so auf einfache Art und Weise an dem Zweirad befestigt werden können. Beispielsweise kann das Gehäuse ein Kunststoffbauteil sein, in dem beispielsweise die Ventile eingegossen sind, da das Gehäuse normalerweise nur einem eingeschränkten Temperaturbereich und einem eingeschränkten Druckbereich ausgesetzt ist.

Das Gehäuse kann als einfacher Rohling bereitgestellt werden. Nur geringer Materialeinsatz kann für das Gehäuse notwendig sein. Beispielsweise kann das Gehäuse ein Spritzgussteil sein. Das Gehäuse bzw. das Hydraulikmodul weist dann ein geringes Boxvolumen und ein geringes Gewicht auf.

Mit dem vorgefertigten Hydraulikmodul ist keine Nachbearbeitung bei der Installation am Zweirad erforderlich.

Für die Ventile und den Druckspeicher können Standard-Funktionselemente aus der Kfz-Technik verwendet werden.

Da das Hydraulikmodul nur wenige Komponenten aufweisen kann, ist eine Rundtischfertigung möglich und damit eine kostengünstige Kurztaktung der Fertigung möglich.

Gemäß der Erfindung umfasst das Hydraulikmodul weiter den Druckspeicher in dem Gehäuse. In dem Gehäuse ist eine weitere Öffnung vorgesehen sein, in die der Druckspeicher aufgenommen ist. Der Druckspeicher ist dazu ausgeführt, Bremsflüssigkeit in die hydraulische Verbindung zwischen dem Einlassventil und der Radbremse zurückzufördern, indem er beispielsweise sein variables Volumen verkleinert. Dazu kann der Druckspeicher ein Federelement aufweisen, das beim Befüllen des Druckspeichers gespannt wird. Beispielsweise kann der Druckspeicher durch Zurückschieben des Kolbens wieder entleert werden. Im Allgemeinen kann der Druckspeicher den beim Befüllen vorhandenen Druck zwischenspeichern und dazu verwenden, sich selbstständig wieder zu entleeren.

Es ist zu verstehen, dass die Öffnungen für die Ventile und/oder den Druckspeicher bohrungsartige Öffnungen sein können, die beispielsweise zumindest abschnittsweise eine zylinderförmige Innenoberfläche aufweisen.

Gemäß einer Ausführungsform der Erfindung umfasst das Hydraulikmodul weiter eine elektronische Steuerung in dem Gehäuse, beispielsweise auf einer Platine mit einem Prozessor. Die Steuerung kann dazu ausgeführt sein, das Einlassventil und das Auslassventil anzusteuern und in Abhängigkeit eines ermittelten Blockierzustands eines Rades des Zweirads zu öffnen und zu schließen. Das Einlassventil kann ein elektrisches Einlassventil sein, das beispielsweise bei Bestromung schließt. Das Auslassventil kann ein elektrisches Auslassventil sein, das beispielsweise bei Bestromung öffnet. Wenn das Rad nicht blockiert, können beide Ventile unbestromt bleiben. Bei einem Blockieren des Rades kann zunächst das Einlassventil geschlossen und eventuell das Auslassventil geöffnet werden.

Beispielsweise kann eine Platine der Steuerung über den in das Gehäuse eingefügten Ventilen angeordnet sein und mit diesen zusammen im Gehäuse vergossen und/oder verklebt sein. Damit kann eine Relativbewegung von Spulen der Ventile zur Leiterplatte vermieden werden.

Gemäß einer Ausführungsform der Erfindung wird ein elektrischer Steckkontakt von dem Gehäuse bereitgestellt, wobei der Anschluss ausgeführt ist, verschiedene elektrische Kontakte bzw. Anschlüsse für andere Komponenten des Zweirads aufzunehmen.

Der Steckkontakt kann einen Anschluss für eine Stromversorgung für das Hydraulikmodul aufweisen. Beispielsweise kann dies ein Akku eines Elektrofahrrads sein.

Weiter kann die Steuerung dazu ausgeführt sein, über einen Anschluss Signale von einem Drehzahlsensor an einem Rad zu empfangen und daraus einen Blockierzustand des Rades des Zweirads zu bestimmen.

Weiter kann die Steuerung dazu ausgeführt sein, über einen Anschluss Signale von einem Stellungssensor der Bremsbetätigungsvorrichtung und/oder von einem hydraulischen Drucksensor in der hydraulischen Verbindung zu empfangen. Mit diesen Signalen kann ermittelt werden, ob ein Fahrer des Rades beabsichtigt zu bremsen.

Weiter kann die Steuerung dazu ausgeführt sein, Signale an eine Signallampe abzugeben, die anzeigen, ob die Steuerung einen Blockierzustand erkannt hat. Beispielsweise kann die Signallampe ausgeschaltet sein, wenn das Rad nicht blockiert und blinken, wenn das Rad blockiert.

Insgesamt können das Einlassventil, das Auslassventil und der Druckspeicher zu einem gemeinsamen Hydraulikmodul zusammengefasst sein, das ein gemeinsames Gehäuse für diese Komponenten bereitstellt und das beispielsweise Anschlüsse für hydraulische und/oder elektrische Leitungen aufweist. Auch eine Steuerplatine mit einer elektronischen Steuerung kann in dem Hydraulikmodul angeordnet sein.

Gemäß einer Ausführungsform umfasst das Gehäuse eine Einlassventil-Öffnung zur Aufnahme des Einlassventils und eine Auslassventil-Öffnung zur Aufnahme des Auslassventils, die parallel zueinander angeordnet sind. In diesen Öffnungen (die auch seitlich miteinander verbunden sein können) können die beiden Ventile angeordnet und vergossen werden. Insbesondere Schnittstellenbohrungen, mit denen das Auslassventil und das Einlassventil mit einer Verbindungsöffnung verbunden sind, können in einer Ebene liegen.

Gemäß einer Ausführungsform umfasst das Gehäuse eine Verbindungsöffnung, die orthogonal zu einer Achse des Einlassventils und/oder des Auslassventils verläuft und die in den ersten hydraulischen Anschluss mündet. Eine Verbindungsöffnung bzw. Verbindungsbohrung, die vom ersten hydraulischen Anschluss ausgeht, verläuft orthogonal zum Einlassventil und zum Auslassventil. Die Achse der Verbindungsöffnung ist rechtwinklig zu den Symmetrieachsen der Ventile.

Die Leiterplatte für die elektronische Steuerung kann oberhalb der Ventile, d.h. gegenüberliegend zu der Verbindungsöffnung angebracht sein. Weiter kann ein Deckel des Gehäuses mit dem Stecker oberhalb der Ventile und/oder der Leiterplatte angebracht sein. Der Stecker (beispielsweise ein Rundstecker) kann bezüglich seiner Symmetrieebene parallel zu den Symmetrieachsen der Ventile angebracht sein.

Gemäß einer Ausführungsform umfasst das Gehäuse eine Verbindungsöffnung, die ausgehend von einer Einlassventil-Öffnung rechtwinklig abknickt und in den zweiten hydraulischen Anschluss mündet. Eine Verbindung vom Einlassventil zur Radbremse ist rechtwinklig zur Symmetrieachse des Einlassventils.

Gemäß der Erfindung umfasst das Gehäuse eine Druckspeicher-Öffnung zur Aufnahme eines Druckspeichers, die parallel zu einer Achse des Einlassventils und/oder des Auslassventils verläuft. Auf diese Weise ist ein einfaches Fügen des Hydraulikmoduls mit nur zwei Montagerichtungen möglich.

Die Öffnung für den Druckspeicher (eine Speicherschnittstellenbohrung) kann gegenüberliegend einer Ventilöffnung angebracht sein. Eine Verbindung vom Druckspeicher zum Auslassventil kann mittig zur Symmetrieachse des Auslassventils beginnend im Auslassventil mündend in der Öffnung für den Druckspeicher vorgesehen sein.

Gemäß einer Ausführungsform umfasst das Hydraulikmodul weiter einen Köcher zur Aufnahme des Gehäuses, der dazu ausgeführt ist, das Hydraulikmodul an einem Rahmenelement des Zweirads zu befestigen. Damit kann das (eventuell für eine Mehrzahl von Zweirad-Typen standardisierte) Hydraulikmodul mit verschiedenen Köchern an verschiedenen Zweirad-Typen befestigt werden.

Der Köcher umfasst eine Klammer, die dazu ausgeführt ist, das Rahmenelement zumindest teilweise zu umgreifen. Über weitere Elemente, wie etwa Schrauben, kann die Klammer am Rahmenelement fixiert werden.

Ein weiterer Aspekt der Erfindung betrifft ein Zweirad mit einem Hydraulikmodul, so wie es obenstehend und untenstehend beschrieben ist. Neben elektrisch angetriebenen Zweirädern kann das Hydraulikmodul auch bei motorisierten Zweirädern mit Verbrennungsmotor zum Einsatz kommen, insbesondere für schwach motorisierte Zweiräder, beispielsweise bis zu einer Maximalgeschwindigkeit von 40 km/h (wie etwa Mofas oder Mopeds).

### Kurze Beschreibung der Figuren

Im Folgenden werden Ausführungsbeispiele der Erfindung mit Bezug auf die beiliegenden Figuren detailliert beschrieben.
Fig. 1 zeigt ein schematisches Diagramm eines Antiblockiersystems gemäß einer Ausführungsform der Erfindung.
Fig. 2 zeigt ein schematisches Diagramm für eine Steuerung eines Antiblockiersystems gemäß einer Ausführungsform der Erfindung.
Fig. 3 zeigt ein schematisches Diagramm für eine Steuerung eines Antiblockiersystems gemäß einer weiteren Ausführungsform der Erfindung.
Fig. 4 zeigt eine dreidimensionale Ansicht eines Gehäuses für ein Hydraulikmodul gemäß einer Ausführungsform der Erfindung.
Fig. 5 zeigt eine dreidimensionale Ansicht von Öffnungen in dem Gehäuse aus der Fig. 4.
Fig. 6 zeigt eine dreidimensionale Querschnittsansicht eines Hydraulikmoduls gemäß einer Ausführungsform der Erfindung.
Fig. 7 zeigt eine weitere dreidimensionale Ansicht des Hydraulikmoduls aus der Fig. 6.
Fig. 8 zeigt eine weitere dreidimensionale Ansicht des Hydraulikmoduls aus der Fig. 6.
Fig. 9 zeigt eine Schnittansicht durch ein Hydraulikmodul vor dem Befestigen am Zweirad gemäß einer Ausführungsform der Erfindung.
Fig. 10 zeigt eine Schnittansicht durch das Hydraulikmodul aus der Fig. 9 nach dem Befestigen am Zweirad.

Grundsätzlich sind identische oder ähnliche Teile mit den gleichen Bezugszeichen versehen.

### Detaillierte Beschreibung von Ausführungsbeispielen

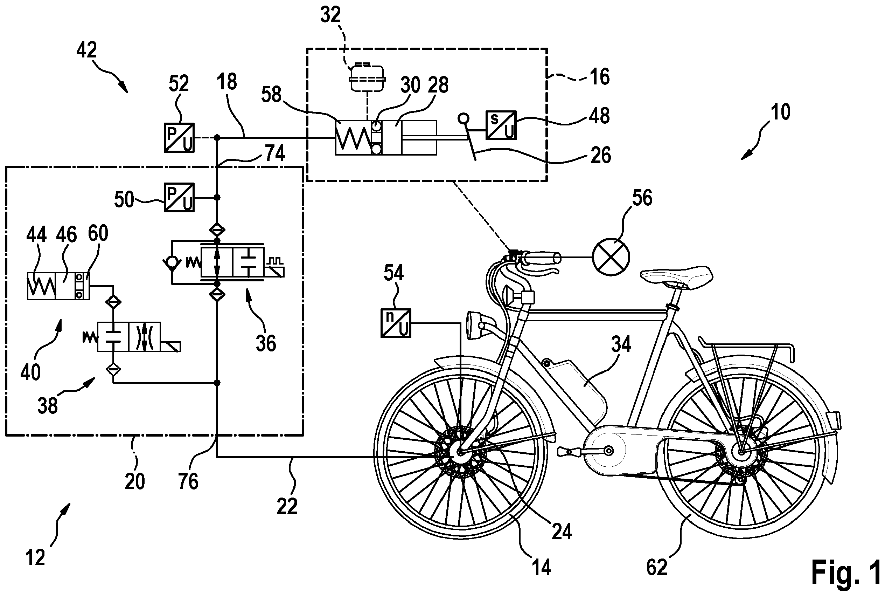

Fig. 1 zeigt ein Zweirad 10 mit einem hydraulischen Antiblockiersystem 12, das dazu ausgeführt ist, ein Blockieren des Vorderrades 14 des Zweirads zu vermindern.

Zu den hydraulischen Komponenten des Antiblockiersystems 12 gehören eine Bremsbetätigungsvorrichtung 16, die über eine erste hydraulische Leitung 18 mit einem Hydraulikmodul 20 verbunden ist, das mit einer zweiten hydraulischen Leitung 22 mit einer Radbremse 24 verbunden ist. Die Radbremse 24 umfasst einen Radbremszylinder, der durch den hydraulischen Druck Bremsbacken der Radbremse an eine Bremsscheibe bzw. an eine Radfelge drückt.

Die Bremsbetätigungsvorrichtung 16 umfasst einen Bremshebel 26, einen Kolben 28 mit Dichtung 30 und optional ein Reservoir 32 für Bremsflüssigkeit.

Das Hydraulikmodul 20, das zusammen mit elektrischen Komponenten in einem Gehäuse 34 am Zweirad 10 angebracht sein kann, umfasst ein Einlassventil 36, ein Auslassventil 38 und einen Druckspeicher 40.

Das Einlassventil 36 ist zwischen die erste Leitung 18 und die zweite Leitung 22 geschaltet und verbindet oder trennt die hydraulische Verbindung 42, die aus den beiden Leitungen 18 und 22 zwischen der Bremsbetätigungsvorrichtung 16 und der Radbremse 24 gebildet ist. Das Einlassventil 36 kann ein Rückschlagventil umfassen, stromlos offen sein, beidseitig befiltert sein und/oder beidseitig durchströmt sein.

Das Auslassventil 38 ist mit der zweiten Leitung 22 und mit dem Druckspeicher 40 hydraulisch verbunden, also mit der hydraulischen Verbindung 42 zwischen dem Einlassventil 36 und der Radbremse 24 verbunden. Das Auslassventil 38 kann stromlos geschlossen sein, beidseitig befiltert sein und/oder beidseitig durchströmt sein.

Der Druckspeicher 40 bzw. Zwischenspeicher 40 für Bremsflüssigkeit umfasst ein Federelement 44, beispielsweise eine Rückstellfeder 44, die einen Kolben 46 gegen den Druck der Bremsflüssigkeit in der Leitung 22 spannt.

Die Bremsbetätigungsvorrichtung 16 kann einen Wegsensor 48 bzw. Stellungssensor 48 aufweisen, mit dem die aktuelle Stellung des Hebels 26 ermittelt werden kann. Aus der Stellung des Hebels 26 kann ein Druck in der ersten hydraulischen Leitung 18 und/oder der hydraulischen Verbindung 42 abgeleitet werden. Alternativ oder zusätzlich kann auch ein interner hydraulischer Drucksensor 50 oder ein externer hydraulischer Drucksensor 52 verwendet werden, um den Druck in der ersten hydraulischen Leitung 18 und/oder der hydraulischen Verbindung 42 zu ermitteln und um daraus optional die Stellung des Hebels 26 abzuleiten.

Der interne hydraulische Drucksensor 50 kann Bestandteil des Hydraulikmoduls 20 sein. Der externe hydraulische Drucksensor 52 kann außerhalb des Hydraulikmoduls 20 angeordnet sein.

Am Rad 14 des Zweirads 10 ist ein Drehzahlsensor 54 angebracht, mit dem die aktuelle Drehgeschwindigkeit bzw. Radumfangsgeschwindigkeit des Rads 14 ermittelt werden kann. Der Drehzahlsensor 54 kann eine Zahnscheibe umfassen, die zusammen mit der Bremsscheibe konzipiert sein kann, aber alternativ auch als separates Teil vorhanden sein kann.

Neben der Bremsbetätigungsvorrichtung 16 kann am Lenker des Zweirads 10 eine Signallampe 56 angebracht sein, die, wie weiter unten noch erläutert wird, dem Fahrer des Zweirads 10 anzeigt, wenn eine Steuerung des Hydraulikmoduls 20 ein Blockieren des Rads 14 erkennt.

Wenn der Fahrer des Zweirads 10 den Hebel 26 betätigt, wird ein Volumen 58 (in einem Zylinder) durch den Kolben 30 verkleinert, so dass Bremsflüssigkeit in die erste Leitung 18 strömt und (falls das Einlassventil 36 offen ist) von dort in die zweite Leitung 22 und in die Radbremse 24 gelangt. Wenn die Radbremse 24 das Rad 14 bremst, steigt der Druck in den Leitungen an. Wie weiter unten noch erläutert wird, können dann bei Blockieren des Rads 14 das Einlassventil 36 geschlossen und das Auslassventil 38 geöffnet werden. Die unter Druck stehende Bremsflüssigkeit aus der zweiten Leitung 22 kann dann in den Druckspeicher 40 gelangen. Dabei wird ein Volumen 60 (in einem Zylinder) vergrößert, indem die Bremsflüssigkeit den Kolben 46 gegen die Kraft des Federelements 44 verschiebt. Auf diese Weise kann der Druck auf die Radbremse 24 vermindert werden, obwohl der Fahrer den Hebel 26 betätigt.

Es ist möglich, dass das Zweirad 10 einen weiteren Bremskreis für das Hinterrad 60 aufweist, der identisch zum in der Fig. 1 gezeigten Bremskreis aufgebaut sein kann. Die beiden Bremskreise können mit unabhängigen Hydraulikmodulen 20 oder mit einem gemeinsamen Hydraulikmodul (in einem gemeinsamen Gehäuse 34) für das Vorderrad 14 und/oder das Hinterrad 62 umgesetzt sein.

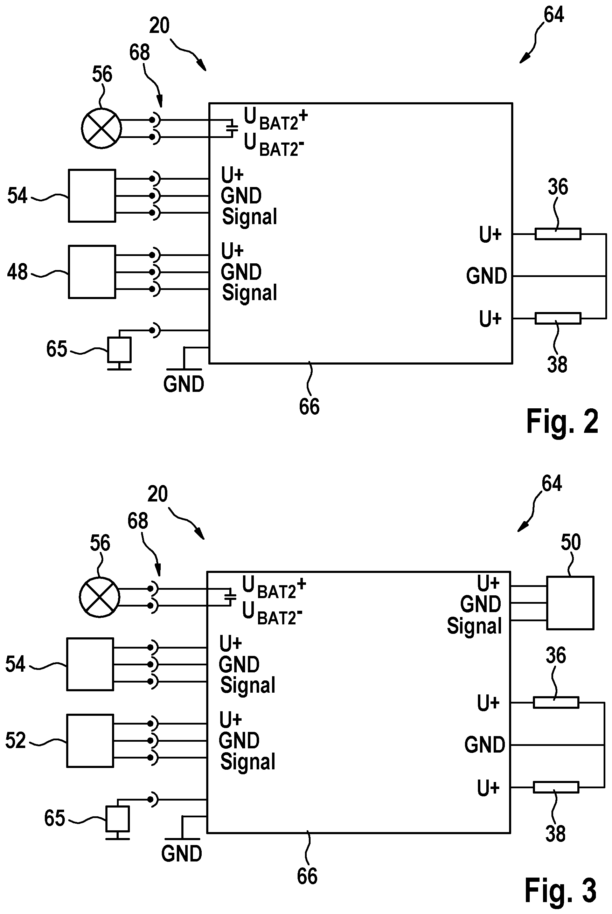

Die Fig. 2 zeigt weitere elektrische Steuerkomponenten des hydraulischen Antiblockiersystems 12. Wie in der Fig. 2 dargestellt ist, kann das Hydraulikmodul 20 eine elektronische Steuerung 64 umfassen, die eine Logik auf einer Leiterplatte 66 aufweisen kann, beispielsweise mit einem Prozessor.

Das Hydraulikmodul 20 kann Anschlüsse 68 für die Signallampe 56, den Drehzahlsensor 54, den Stellungssensor 48 und eine Stromversorgung 65 (wie etwa eine Batterie des Zweirads) aufweisen. Über eine zusätzliche (interne) Knopfzelle kann eine autarke Stromversorgung für das Hydraulikmodul 20 bereitgestellt werden.

Die Anschlüsse 68 für das Hydraulikmodul 20 umfassen Versorgungspins und Signalpins (Stecker mit externen Kontakten) für die Masse (GND) für den Stellungssensor 48, die Spannungsversorgung (U+) für den Stellungssensor 48 und für das Signal vom Stellungssensor 48 sowie die Masse (U_{BAT2-}) für die Signallampe 56 und die Spannungsversorgung (U_{BAT2+}) für die Signallampe 56. An diese Anschlüsse 68 kann eine elektrische Verbindung bzw. Leitung von der Bremsbetätigungsvorrichtung 16 zum Hydraulikmodul 20 angeschlossen werden.

Weiter umfassen die Anschlüsse 68 für das Hydraulikmodul 20 Versorgungspins und Signalpins (Stecker mit externen Kontakten), die Masse (GND) für den Drehzahlsensor 54, die Spannungsversorgung (U+) für den Drehzahlsensor 54 und für das Signal vom Drehzahlsensor 54. An diese Anschlüsse 68 kann eine elektrische Verbindung bzw. Leitung von dem Drehzahlsensor 54 am Rad 14 zum Hydraulikmodul 20 angeschlossen werden.

Weiter umfasst das Hydraulikmodul einen Anschluss 68 für die Masse (GND) des Hydraulikmoduls 20 und für die Stromversorgung 65.

Die Leiterplatte 66 ist darüber hinaus über interne Leitungen im Hydraulikmodul 20 mit dem Einlassventil 36 und dem Auslassventil 38 verbunden.

Die Fig. 3 zeigt eine alternative Ausführungsform für eine elektronische Steuerung 64, bei der das Hydraulikmodul 20 einen internen Drucksensor 50 aufweist. Alternativ oder zusätzlich kann die Steuerung 64 einen Anschluss 68 für einen externen Drucksensor 52 aufweisen.

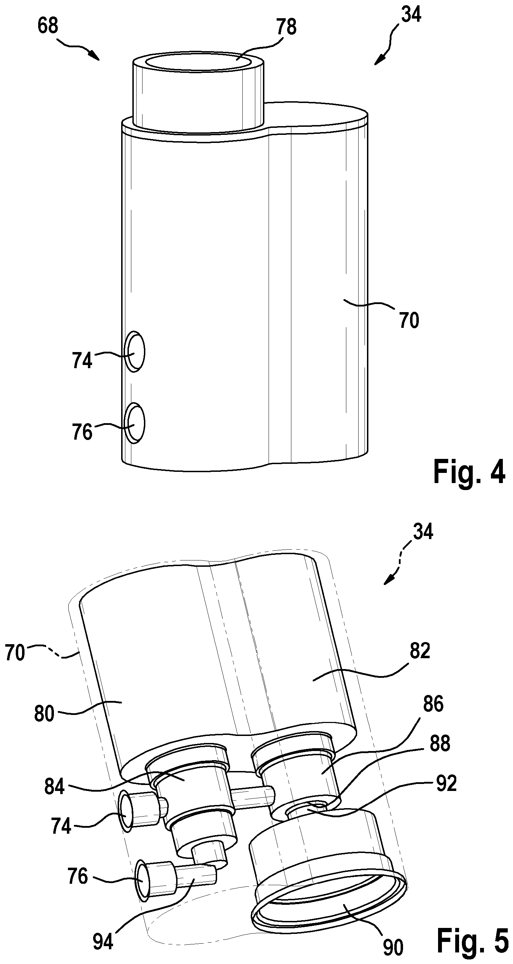

Fig. 4 zeigt eine dreidimensionale Ansicht einer weiteren Ausführungsform eines Gehäuses 34 für das Hydraulikmodul 20. Das Gehäuse 34 umfasst eine Basis 70 mit einem im Wesentlichen doppelzylinderförmigen Querschnitt und einen Deckel 72, der auf die Basis 70 gesetzt ist. Die Basis 70 und der Deckel 72 können jeweils einstöckig gefertigt sein, beispielsweise aus Kunststoff oder aus einer Aluminiumlegierung. Das Gehäuse 34 bzw. die Basis 70 und der Deckel 72 können ein Kunststoffgehäuse sein.

Das Gehäuse 34 bzw. die Basis 70 weisen einen ersten Hydraulikanschluss 74 zum Anschluss der Bremsbetätigungsvorrichtung 16 auf. An den Hydraulikanschluss 74 kann die Leitung 18 mittels eines Hydrauliksteckers angeschlossen werden. Weiter weist das Gehäuse 34 bzw. die Basis 70 einen zweiten Hydraulikanschluss 76 zum Anschluss der Radbremse 24 auf. An den Hydraulikanschluss 76 kann die Leitung 22 mittels eines Hydrauliksteckers angeschlossen werden. Die beiden Hydraulikanschlüsse sind seitlich an dem Gehäuse 34 angebracht und verlaufen im Wesentlichen orthogonal zu einer Längsrichtung des Gehäuses 34.

Das Gehäuse 34 bzw. der Deckel 72 weisen einen elektrischen Steckkontakt 78 auf, der die Anschlüsse 68 oder zumindest einen Teil der Anschlüsse 68 bereitstellt. Der elektrische Steckkontakt kann über den Deckel 72 hinausragen und im Wesentlichen parallel zur Längsrichtung des Gehäuses 34 verlaufen.

Die Fig. 5 zeigt eine dreidimensionale Ansicht von Öffnungen bzw. Aussparungen in dem Gehäuse 34 bzw. in der Basis 70. Zwei zylinderförmige Öffnungen 80, 82, die sich seitlich überlappen, stellen einen Spulen- und Leiterplattenraum bereit, in dem das Einlassventil 36, das Auslassventil 38 und die Leiterplatte 66 angeordnet werden können. Die beiden Öffnungen verlaufen im Wesentlichen parallel und in Richtung der Längsachse des Gehäuses 34.

Am Boden der Öffnungen 80, 82 befinden sich zylinderförmige Aussparungen 84, 86, die einen geringeren Durchmesser als die Öffnungen 80, 82 aufweisen und sich nicht mehr überlappen. Die Aussparung 84 stellt eine Schnittstelle 84 für das Einlassventil 36 und die Aussparung 86 eine Schnittstelle 86 für das Auslassventil 38 bereit.

Eine Verbindungsöffnung 88 verläuft quer zu den Öffnungen 80, 82 bzw. durch die Aussparungen 84, 86, so dass diese durch die Verbindungsöffnung 88 verbunden werden. Weiter ist die Aussparung 84 mit dem ersten Hydraulikanschluss 74 verbunden, der auf gleicher Höhe mit der Verbindungsöffnung 88 verläuft. Die Verbindungsöffnung 88 stellt eine Verbindung von der Bremsbetätigungsvorrichtung 16 zum Einlassventil 36 und zum Auslassventil 38 bereit. Die Bohrachse der Verbindungsöffnung 88 kann orthogonal zu den Symmetrieachsen der beiden Ventile 36, 38 verlaufen.

Eine weitere Öffnung 90, die an der Basis 70 den Öffnungen 80, 82 gegenüberliegt, dient als Aufnahme für den Druckspeicher 40. Die Öffnung 90 liegt der Öffnung 82 für das Auslassventil 38 gegenüber und ist mit der Aussparung 86 über eine weitere Verbindung 92 verbunden, die den Druckspeicher 40 mit dem Auslassventil 38 verbindet. Die Öffnung 90 und/oder die Verbindung 92 können mittig zur Symmetrieachse des Auslassventils 38 verlaufen.

Eine weitere Verbindungsöffnung 94 verbindet den zweiten Hydraulikanschluss 76 mit der Aussparung 84. Die Verbindungsöffnung 94 ist rechtwinklig abgeknickt und stellt eine Verbindung vom Einlassventil 36 zur Radbremse 24 bereit.

Die Verbindungsöffnungen 88 und 94 weisen einen etwas kleineren Durchmesser als die Hydraulikanschlüsse 74, 76 auf.

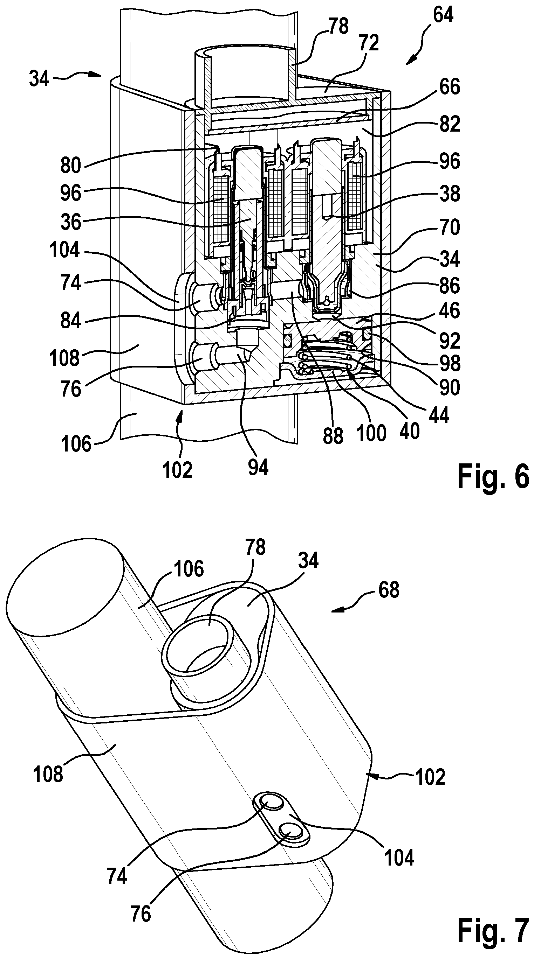

Die Fig. 6 zeigt eine dreidimensionale Querschnittsansicht eines Hydraulikmoduls 20. Das Hydraulikmodul wurde dadurch fertiggestellt, dass die beiden Ventile 36, 38 in den Öffnungen 80, 82 der Basis 70 angeordnet und eingegossen wurden. Weiter wurde die Leiterplatte auf die Ventile 36, 38 aufgesetzt. Es ist möglich, dass die Leiterplatte 66 zusammen mit den Ventilen 36, 83 in die Basis 70 eingegossen ist. Die Spulen 96 der Ventile 36, 38 befinden sich dabei in den Öffnungen 80, 82, die jeweilige Ventilköpfe sind, in der jeweiligen Aussparung 84, 86 angeordnet. Das Auslassventil 38, das Einlassventil 36 und die Verbindungsöffnung 88 befinden sich in einer Ebene, wobei die Verbindungsöffnung 88 parallel zur Achse der Ventile 36, 38 verläuft. Die Ventile 36, 38 und ihre Spulen 96 können Standardkomponenten aus der Kfz-Technik sein.

Auf die Leiterplatte wurde der Deckel 72 aufgesetzt. Der Verschlussdeckel 72 kann alternativ eine Laufhülse bilden und als Vorbaugruppe ausgebildet sein. Die Leiterplatte 66 ist oberhalb der Spulen 96 und der Deckel 70 bzw. der Stecker 78 ist oberhalb der Spulen 96 angeordnet. Der Stecker 78 (beispielsweise ein Rundstecker) ist bezüglich seiner Symmetrieebene parallel zu den Symmetrieachsen der Ventile 36, 38.

In die Aufnahme bzw. Öffnung 90 wurde der Druckspeicher 40 eingesetzt, der einen Kolben 46, einen O-Ring 96, eine Feder 44 und einen Verschlussdeckel 100 umfasst, die auch Standardkomponenten aus der Kfz-Technik sein können.

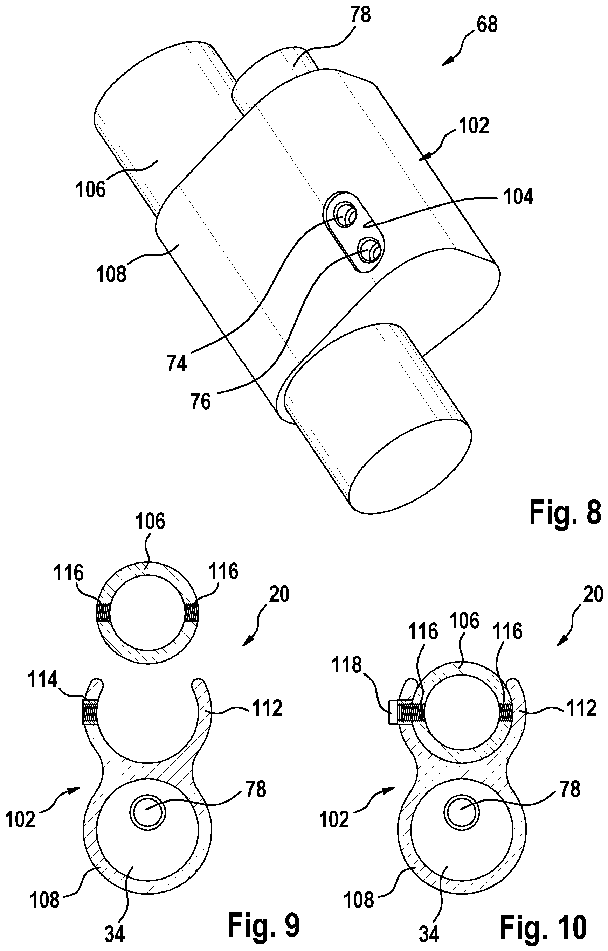

Wie auch in den Fig. 7 und 8 gezeigt ist, umfasst das Hydraulikmodul weiter eine Halterung 102 bzw. einen Köcher 102, der eine Aufnahme für das Gehäuse 34 bereitstellt. Seitlich am Köcher 102 befindet sich eine Öffnung 104, durch die auf die Hydraulikanschlüsse 74, 76 zugegriffen werden kann.

Über den Köcher 102 ist das Gehäuse 34 an einem Rahmenrohr 106 des Zweirads 10 befestigt. Beispielsweise ist das Gehäuse 34 im Köcher 102 verklebt.

Der Köcher weist eine Seitenwand 108 auf, die das Gehäuse 34 zumindest teilweise umschließt und eine Bodenwand 110, auf der das Gehäuse 34 (auf der Seite des Druckspeichers 40) aufsitzt. An der anderen Seite ragt der Steckkontakt 78 über den Köcher 102 hinaus.

Das Gehäuse 34 und die damit verbauten Komponenten können als Standardkomponenten ausgestaltet sein. Insbesondere das Gehäuse 34 kann dann mit hohen Stückzahlen gefertigt werden, um eine entsprechende Wirtschaftlichkeit sicherzustellen. Der Köcher 102 kann dazu dienen, individuelle Ausführungen zu erzeugen, mit denen das Gehäuse 34 im Rahmenbereich platziert werden kann. Dazu kann das vormontierte Standardgehäuse 34 in ein entsprechendes Negativ bzw. Aufnahme des Köchers 102 montiert werden.

Am Köcher 102 befinden sich individuelle Kundenschnittstellen, die nach dem jeweiligen Kundenwunsch gestaltet werden können oder ebenfalls einem angebotenen Standard entsprechen. Der Rahmenbereich des Köchers 102 kann individuell an das jeweilige Zweirad 10 angepasst werden.

Fig. 9 zeigt eine Schnittansicht durch ein Hydraulikmodul 20 vor dem Befestigen am Zweirad 10. Fig. 10 zeigt das Hydraulikmodul 20 nach dem Befestigen.

Der Köcher 102 aus den Fig. 9 und 10 umschließt das Gehäuse 34 mit seiner Seitenwand 104 ringförmig von allen Seiten.

Der Köcher 102 weist eine Klammer 112 auf, mit dem das Hydraulikmodul 20 am Rahmenrohr 106 befestigt werden kann. Die Klammer kann mittels eines Verbindungselements am Rahmenrohr 106 fixiert werden.

In der Klammer 112 kann sich eine Buchse 114 (beispielsweise aus Metall) befinden, mit der die Klammer 112 über ein Gewinde 116 im Rahmenrohr 106 mittels einer Schraube 108 befestigt werden kann.

Ergänzend ist darauf hinzuweisen, dass "umfassend" keine anderen Elemente oder Schritte ausschließt und "eine" oder "ein" keine Vielzahl ausschließt. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkung anzusehen.

## Patentansprüche

1. Hydraulikmodul (20) für ein hydraulisches Antiblockiersystem (12) für ein Zweirad (10), das Hydraulikmodul (12) umfassend:
einen ersten hydraulischen Anschluss (74) zum Verbinden des Hydraulikmoduls (20) mit einer hydraulischen Leitung (18) zu einer Bremsbetätigungsvorrichtung (16);
einen zweiten hydraulischen Anschluss (76) zum Verbinden des Hydraulikmoduls (20) mit einer hydraulischen Leitung (22) zu einer Radbremse (24);
ein Einlassventil (36) zum Verbinden und Trennen des ersten hydraulischen Anschlusses (74) von dem zweiten hydraulischen Anschluss (76);
ein Auslassventil (38) zum Verbinden und Trennen eines Druckspeichers (40) mit dem zweiten hydraulischen Anschluss (76);
ein Gehäuse (34), in dem das Einlassventil (36) und das Auslassventil (38) aufgenommen sind und das den ersten hydraulischen Anschluss (74) und den zweiten hydraulischen Anschluss (76) bereitstellt;
**gekennzeichnet durch**
einen Köcher (102) zur Aufnahme des Gehäuses (34), der eine Klammer (112) aufweist, die dazu ausgeführt ist, das Hydraulikmodul (20) an einem Rahmenelement (106) des Zweirads (10) zu befestigen; und
wobei der Druckspeicher (40) in dem Gehäuse angeordnet ist und das Gehäuse (34) eine Druckspeicher-Öffnung (90) zur Aufnahme des Druckspeichers (40) umfasst, die parallel zu einer Achse des Einlassventils (36) und/oder des Auslassventils (38) verläuft;
wobei der Köcher (102) eine Seitenwand (108) aufweist, die das Gehäuse (34) zumindest teilweise umschließt und eine Bodenwand (110) aufweist, auf der das Gehäuse (34) auf der Seite des Druckspeichers (40) aufsitzt.

2. Hydraulikmodul (20) nach Anspruch 1 oder 2, weiter umfassend:
eine elektronische Steuerung (64) in dem Gehäuse (34).

3. Hydraulikmodul (20) nach einem der vorhergehenden Ansprüche,
wobei ein elektrischer Steckkontakt (78) von dem Gehäuse (34) bereitgestellt wird, der Anschlüsse (68) umfasst, die ausgeführt sind für zumindest eines aus: einer Stromversorgung (65) für das Hydraulikmodul (20); einem Drehzahlsensor (54) an einem Rad (14) des Zweirads (10); einem Stellungssensor (48) für einen Hebel (26) an einer Bremsbetätigungsvorrichtung (16); einem Drucksensor (50, 52); einer Signallampe (56).

4. Hydraulikmodul (20) nach einem der vorhergehenden Ansprüche,
wobei das Gehäuse (34) eine Einlassventil-Öffnung (80) zur Aufnahme des Einlassventils (36) und eine Auslassventil-Öffnung (82) zur Aufnahme des Auslassventils (38) umfasst, die parallel zueinander angeordnet sind.

5. Hydraulikmodul (20) nach einem der vorhergehenden Ansprüche,
wobei das Gehäuse (34) eine Verbindungsöffnung (88) umfasst, die orthogonal zu einer Achse des Einlassventils (36) und/oder des Auslassventils (38) verläuft und die in den ersten hydraulischen Anschluss (74) mündet.

6. Hydraulikmodul (20) nach einem der vorhergehenden Ansprüche,
wobei das Gehäuse (34) eine Verbindungsöffnung (94) umfasst, die ausgehend von einer Einlassventil-Öffnung (80) rechtwinklig abknickt und in den zweiten hydraulischen Anschluss (76) mündet.

7. Zweirad (10) mit einem Hydraulikmodul (20) nach einem der vorhergehenden Ansprüche.

## Claims

1. Hydraulic module (20) for a hydraulic anti-lock system (12) for a two-wheeled vehicle (10), the hydraulic module (12) comprising:
a first hydraulic port (74) for the connection of the hydraulic module (20) to a hydraulic line (18) to a brake actuating device (16);
a second hydraulic port (76) for the connection of the hydraulic module (20) to a hydraulic line (22) to a wheel brake (24);
an inlet valve (36) for the connection and separation of the first hydraulic port (74) to and from the second hydraulic port (76);
an outlet valve (38) for connecting and separating a pressure accumulator (40) to and from the second hydraulic port (76);
a housing (34) in which the inlet valve (36) and the outlet valve (38) are accommodated and which provides the first hydraulic port (74) and the second hydraulic port (76); **characterized by**
a holder (102) for accommodating the housing (34), which cover has a clamp (112) which is designed to fasten the hydraulic module (20) to a frame element (106) of the two-wheeled vehicle (10); and
wherein the pressure accumulator (40) is arranged in the housing, and the housing (34) comprises a pressure accumulator opening (90) for accommodating the pressure accumulator (40), which pressure accumulator opening runs parallel to an axis of the inlet valve (36) and/or of the outlet valve (38);
wherein the holder (102) has a side wall (108) which at least partially surrounds the housing (34) and has a base wall (110) on which the housing (34), at the side of the pressure accumulator (40), is seated.

2. Hydraulic module (20) according to Claim 1 or 2, furthermore comprising:
an electronic controller (64) in the housing (34).

3. Hydraulic module (20) according to one of the preceding claims,
wherein an electrical plug contact (78) is provided by the housing (34), which plug contact comprises connectors (68) which are designed for at least one of: an electrical supply (65) for the hydraulic module (20); a rotational speed sensor (54) at a wheel (14) of the two-wheeled vehicle (10); a position sensor (48) for a lever (26) at a brake actuation device (16); a pressure sensor (50, 52); a signal lamp (56).

4. Hydraulic module (20) according to one of the preceding claims, wherein the housing (34) comprises an inlet valve opening (80) for accommodating the inlet valve (36) and an outlet valve opening (82) for accommodating the outlet valve (38), which openings are arranged parallel to one another.

5. Hydraulic module (20) according to one of the preceding claims, wherein the housing (34) comprises a connecting opening (88) which runs orthogonally with respect to an axis of the inlet valve (36) and/or of the outlet valve (38) and which opens into the first hydraulic port (74).

6. Hydraulic module (20) according to one of the preceding claims, wherein the housing (34) comprises a connecting opening (94) which, proceeding from an inlet valve opening (80), has a right-angled bend and opens into the second hydraulic port (76).

7. Two-wheeled vehicle (10) having a hydraulic module (20) according to one of the preceding claims.

## Revendications

1. Module hydraulique (20) pour un système d'antiblocage hydraulique (12) pour une bicyclette (10), le module hydraulique (12) comprenant :
un premier raccord hydraulique (74) pour relier le module hydraulique (20) par une conduite hydraulique (18) à un dispositif d'actionnement de frein (16) ;
un deuxième raccord hydraulique (76) pour relier le module hydraulique (20) par une conduite hydraulique (22) à un frein de roue (24) ;
une soupape d'admission (36) pour la connexion du premier raccord hydraulique (74) au deuxième raccord hydraulique (76) et pour leur séparation l'un de l'autre ;
une soupape d'échappement (38) pour la connexion d'un accumulateur de pression (40) au deuxième raccord hydraulique (76) et pour leur séparation l'un de l'autre ;
un boîtier (34) dans lequel sont reçues la soupape d'admission (36) et la soupape d'échappement (38) et qui fournit le premier raccord hydraulique (74) et le deuxième raccord hydraulique (76) ;
**caractérisé par**
un logement (102) pour recevoir le boîtier (34), qui présente une pince (112) qui est réalisée de manière à fixer le module hydraulique (20) à un élément de cadre (106) de la bicyclette (10) ; et l'accumulateur de pression (40) étant disposé dans le boîtier et le boîtier (34) comprenant une ouverture d'accumulateur de pression (90) pour recevoir l'accumulateur de pression (40), qui s'étend parallèlement à un axe de la soupape d'admission (36) et/ou de la soupape d'échappement (38) ;
le logement (102) présentant une paroi latérale (108) qui entoure au moins en partie le boîtier (34) et qui présente une paroi de font (110) sur lequel le boîtier (34) repose du côté de l'accumulateur de pression (40).

2. Module hydraulique (20) selon la revendication 1 ou 2, comprenant en outre :
une commande électronique (64) dans le boîtier (34).

3. Module hydraulique (20) selon l'une quelconque des revendications précédentes, dans lequel un contact électrique enfichable (78) est fourni par le boîtier (34), lequel comprend des raccords (68) qui sont réalisés pour au moins l'un parmi : une alimentation électrique (65) pour le module hydraulique (20) ; un capteur de vitesse de rotation (54) sur une roue (14) de la bicyclette (10) ; un capteur de position (48) pour un levier (26) au niveau d'un dispositif d'actionnement de frein (16) ; un capteur de pression (50, 52) ; une lampe signalétique (56).

4. Module hydraulique (20) selon l'une quelconque des revendications précédentes, dans lequel le boîtier (34) comprend une ouverture de soupape d'admission (80) pour recevoir la soupape d'admission (36) et une ouverture de soupape d'échappement (82) pour recevoir la soupape d'échappement (38), lesquelles sont disposées parallèlement l'une à l'autre.

5. Module hydraulique (20) selon l'une quelconque des revendications précédentes, dans lequel le boîtier (34) comprend une ouverture de liaison (88) qui s'étend perpendiculairement à un axe de la soupape d'admission (36) et/ou de la soupape d'échappement (38) et qui débouche dans le premier raccord hydraulique (74).

6. Module hydraulique (20) selon l'une quelconque des revendications précédentes, dans lequel le boîtier (34) comprend une ouverture de liaison (94) qui est coudée à angle droit à partir d'une ouverture de soupape d'admission (80) et qui débouche dans le deuxième raccord hydraulique (76).

7. Bicyclette (10) comprenant un module hydraulique (20) selon l'une quelconque des revendications précédentes.
